# EUROPEAN PATENT SPECIFICATION

(11) **EP 3 460 418 B1**
(45) Date of publication and mention of the grant of the patent: **19.05.2021**
(21) Application number: 16902218.3
(22) Date of filing: 27.10.2016
(51) Int. Cl.: G01F 1/38, G01F 11/08, G01F 3/22

(54) **WIDE-RANGE DIAPHRAGM GAS METER**
MEMBRANGASMESSER MIT GROSSEM MESSBEREICH
COMPTEUR DE GAZ À DIAPHRAGME À LARGE ÉTENDUE DE MESURE

(30) Priority: 17.05.2016 CN 201610326337
(43) Date of publication of application: 27.03.2019
(73) Proprietor: Chengdu Qinchuan IoT Technology Co., Ltd., Sichuan 610100 (CN)
(72) Inventor: SHAO, Zehua, Longquanyi District, Chengdu, Sichuan 610100 (CN)
(74) Representative: Ipside
(86) International application number: PCT/CN2016/103552
(87) International publication number: WO 2017/197839

(56) References cited:
- EP-A1- 0 081 641
- EP-A2- 1 464 931
- CN-A- 1 758 032
- CN-A- 105 784 048
- CN-U- 201 555 620
- CN-U- 202 119 482
- CN-U- 204 373 717
- CN-U- 204 373 717
- CN-U- 205 118 405
- CN-U- 205 785 398
- CN-Y- 2 700 851
- CN-Y- 2 700 851
- CN-Y- 201 037 778
- FR-A1- 2 778 981
- GB-A- 725 118
- JP-A- 2004 151 023
- US-A- 4 091 668
- US-B1- 6 772 629
- US-B1- 6 772 629

## Description

### Technical Field

The present disclosure relates to the technical field of gas meters, and specifically relates to a wide-range diaphragm gas meter.

### Background Art

For current diaphragm gas meters, it is hard to guarantee the precision during manufacturing as their diaphragms are flexible rubber pieces and their transmission mechanisms are composed of plastic parts. They are made acceptable by changing the gear sleeves of the drive counters, adjusting the number of teeth of the gears and checking with a standard checking device for gas meters. Due to a wide error distribution and limited gear number, the precision adjustment for gas meters has a certain range and shifts. Therefore, the precision is not enough. A diaphragm gas meter is disclosed in document CN 205 118 405 U.

### Summary

The purpose of the present disclosure is to provide a wide-range diaphragm gas meter to alleviate the problems of poor measurement accuracy and low precision existing in the diaphragm gas meters in the prior art as a result of poor operational stability of those gas meters.

The present disclosure is realized in the following way.

According to the above purpose, the present disclosure provides a wide-range diaphragm gas meter.

The wide-range diaphragm gas meter includes a movement (machine core), the movement including a diaphragm capsule (diaphragm chamber), two diaphragms, two diaphragm covers, a valve seat, a valve cover, a fine adjustment means and two groups of four-shaft rotation-transfer systems which drive the valve cover to rotate unidirectionally relative to the valve seat under an alternating motion of the two diaphragms, specifically:
The valve seat is connected with the diaphragm capsule. The valve cover is in slidable connection with the valve seat. The diaphragm capsule includes two metering chambers, respectively. The two diaphragms are located in the two metering chambers, respectively. Each of the diaphragms divides the corresponding metering chamber into two metering cavities. Each of the diaphragms is connected with the corresponding four-shaft rotation-transfer system. Each group of the four-shaft rotation-transfer systems includes a connecting rod, a rocking rod, a vertical shaft, a middle shaft, a crank and a center crank wheel having transmission gears. Specifically, the vertical shaft is a first rotating shaft which is in fixed connection with one end of the rocking rod. The other end of the rocking rod is hinged to one end of the connecting rod. A rotation shaft for connecting the rocking rod and the connecting rod is a second rotating shaft. The other end of the connecting rod is hinged to the crank. A center shaft of the crank is a third rotating shaft. The center crank wheel is sleeved on the middle shaft. The middle shaft is a fourth rotating shaft. The valve cover is disposed to be coaxial with the center crank wheel. The rotation of the center crank wheel around the middle shaft causes the valve cover to rotate around the middle shaft synchronously.

The mounting limiting positions of the diaphragms deviate from their optimum limiting positions within a range from -0.5mm to +0.5mm. The rocking rod has an angle error within a range from -0.8° to +0.8°. The fine adjustment means is mounted at the center crank wheel to adjust a position of a gas inlet of the valve cover relative to the valve seat when a diaphragm is in a limiting position, such that a gas flow direction is changed before the diaphragm reaches the limiting position and thus pressures at two sides of the diaphragm are balanced and the diaphragm in the metering cavity is in a non-tensioning state, where the limiting position refers to that the third rotating shaft is located in a plane formed by the fourth rotating shaft and the second rotating shaft.

Preferably, the four-shaft rotation-transfer systems further includes a front flag piece and a rear flag piece. One of the diaphragms is in driving connection with one vertical shaft via the front flag piece. The other diaphragm is in driving connection with the other vertical shaft via the rear flag piece. Linear reciprocation of each of the diaphragms causes the corresponding vertical shafts to rotate.

Preferably, the movement further includes a diaphragm support. The diaphragms are mounted in the diaphragm capsule via the diaphragm support.

According to the invention, the first rotating shaft, the second rotating shaft, the third rotating shaft and the fourth rotating shaft in each of the four-shaft rotation-transfer systems are parallel with each other and perpendicular to a plane where the center crank wheel is located.

According to the invention, the fine adjustment means includes a dial wheel and a pointer body. The center crank wheel is provided to be a pointer disk. A mounting shaft and a hollow cam shaft are mounted on the dial wheel. The mounting shaft and the cam shaft are located at two sides of a plane where the dial wheel is located. The transmission gear is mounted on the cam shaft. The cam shaft, the mounting shaft and the transmission gear are coaxially provided. The crank is mounted on the pointer disk. The pointer disk is further provided with a circle center hole coaxial with the pointer disk, an eccentric hole and successive scale slots. The mounting shaft is inserted in the circle center hole. Two recesses are respectively provided at the upper and lower ends of the eccentric hole, with the recesses communicating with the eccentric hole. The recess at the lower end of the eccentric hole is in communication with the circle center hole. The two recesses are provided opposite to each another, bounded by a diameter of the eccentric hole and in communication with each other. And a recess bottom of the recess at the lower end of the eccentric hole is located between the circle center hole and the eccentric hole.

The pointer tip end of the pointer body is provided with a protrusion for tight engagement within the scale slots. A rotation shaft is provided at a pointer tail end of the pointer body. An engagement portion is provided at a peripheral surface of the rotation shaft. The engagement portion protrudes outwards in a radial direction of the rotation shaft. An engagement groove is provided at a circumferential surface of the mounting shaft. The engagement groove is concave inwards in a radial direction of the mounting shaft. The mounting shaft is connected with the pointer disk through axial positioning of the engagement portion and the engagement groove. An eccentric pin is provided at a lower end of the rotation shaft.

A wheel surface of the dial wheel is provided with an elongated hole. The elongated hole extends in its length along a radial direction of the transmission gear. The eccentric pin is inserted in the elongated hole.

According to the invention, each of the recesses is a semicircular recess, and the semicircular recess has a radius greater than a radius of the eccentric hole. The engagement portion is provided to be of a semicircular shape accordingly.

According to the invention, the line connecting the rotation shaft and the circle center hole intersects with the line connecting the crank and the circle center hole, with an included angle of the lines being an acute angle. One side surface of the pointer body that is close to the circle center hole is provided to be an arc surface, and the arc surface is concave towards the other side of the pointer body.

Preferably, each vertical shaft is made of a metal material.

Preferably, the wide-range diaphragm gas meter further includes a counter. The output end of the movement is connected with the input end of the counter.

Preferably, the movement includes a transition gear, an axial gear, a gear sleeve and an adjustment gear, the transition gear is connected with the transmission gear via a gear, an output end of the transition gear engages with an input end of the axial gear, an output end of the axial gear engages with an input end of the adjustment gear, an output end of the adjustment gear engages with an input end of the counter.

The present disclosure provides the following beneficial effects.

To sum up, the present disclosure provides a wide-range diaphragm gas meter which has a simple and reasonable structure and is easy to be processed and manufactured, with low manufacturing costs. In addition, the wide-range diaphragm gas meter has a reasonable transmission mechanism where the transmission parts operate stably, safely and reliably. The gas meter has a high measurement accuracy and precision and thus extends the application scope of the wide-range diaphragm gas meter. It is described specifically below.

The wide-range diaphragm gas meter includes a movement for circulating gas. That is, gas enters a metering chamber with a constant volume and exits when the metering chamber is filled with gas. During such process, by the reasonable transmission mechanism, the numbers of times of gas introduction and discharge are converted into volume, and since the transmission mechanism is connected with the counter, the gas flux is reflected and displayed on the counter, realizing gas measurement. During the process of gas introduction and discharge, the gas flow causes the diaphragms to reciprocate in the metering chambers. Such reciprocation of the diaphragms turns the valve cover to rotate and the rotation of the valve cover is transferred to the counter, realizing metering of gas flow. During the motion of the diaphragms, each four-shaft subsystem passes two limiting positions where the diaphragms have to change their motion directions for the four-shaft subsystem to cross the limiting positions. In the present embodiment, a positioning means is used to accurately locate the limiting positions of the diaphragms. After mounting, the mounting limiting positions of the diaphragms deviate from their optimum limiting positions within a range from -0.5mm to +0.5mm. The rocking rod has an angle error within a range from -0.8° to +0.8°. Adjust a fine adjustment means to adjust the position of the gas inlet of the valve cover relative to the valve seat when a diaphragm is in a limiting position, and thus adjust the timing of gas introduction or discharge in the metering cavities, so that the gas flow direction is changed before the diaphragm reaches the limiting position. In this case, the pressures at two sides of the diaphragm are balanced, the diaphragm in the metering cavities is in a non-tensioning state, the gas flow is stable, and the fluctuation in gas pressure loss is slight. Therefore, the gas does not waste excess energy on the diaphragm and does not perform work on the diaphragm. This prevents energy loss in the case where the gas performs work on the diaphragms. Hence, the volume of the gas flowing out from the metering cavities is more accurate, i.e. the cyclic volume is more accurate and thus the metering precision is improved.

### Brief Description of Drawings

In order to more clearly illustrate the technical solutions provided in the embodiments of the present disclosure, drawings necessary for the embodiments will be briefly described below. It should be understood that the following drawings merely show some embodiments of the disclosure and thus should not be construed as limiting the scope. Other related drawings can be obtained by those ordinarily skilled in the art according to these drawings without paying any creative effort.
Fig. 1 is a structural diagram of a wide-range diaphragm gas meter provided by an embodiment of the present disclosure;
Fig. 2 is a top view of a wide-range diaphragm gas meter provided by an embodiment of the present disclosure;
Fig. 3 is a top view of a fine adjustment means of a wide-range diaphragm gas meter provided by an embodiment of the present disclosure;
Fig. 4 is a top view of a pointer disk of a wide-range diaphragm gas meter provided by an embodiment of the present disclosure;
Fig. 5 is a sectional view of a fine adjustment means of a wide-range diaphragm gas meter provided by an embodiment of the present disclosure.

### Summary of reference signs:

Movement 100, diaphragm capsule 200, diaphragm 300, valve cover 400, metering cavity 500, crank 600,
center crank wheel 101, connecting rod 102, rocking rod 103, front flag piece 104, rear flag piece 105, vertical shaft 106, diaphragm support 107, transmission gear 108,
engagement groove 201, eccentric hole 202, recess 203, pointer body 204, rotation shaft 205, dial wheel 206, elongated hole 207, eccentric pin 208, connecting plate 209, engagement groove 210, engagement portion 211, cam shaft 212, mounting shaft 213, arc surface 214, scale groove 215, circle center hole 216,
transition gear 301, axial gear 302, gear sleeve 303, adjustment gear 304, counter 305.

### Detailed Description of Embodiments

For current diaphragm gas meters, it is hard to guarantee the precision during manufacturing as their diaphragms are flexible rubber pieces and their transmission mechanisms are composed of plastic parts. They are made acceptable by changing the gear sleeves of the drive counters, adjusting the number of teeth of the gears and checking with a standard checking device for gas meters. Due to a wide error distribution and limited gear number, the precision adjustment for gas meters has a certain range and shifts. Therefore, the precision is not enough.

In view of this, the designer of the present disclosure designs a wide-range diaphragm gas meter which has a simple and reasonable structure and is easy to be processed and manufactured. In addition, in the wide-range diaphragm gas meter, by adjusting the position of its crank, the gas flow direction changes before the diaphragms turn over during the operation process of its movement. As a result, the pressures at two sides are already balanced before the diaphragms reach the limit positions where they turn over. In this way, the motion of the movement is more stable and the measurement precision is improved.

In order to make the purposes, technical solutions and advantages of the embodiments of the present disclosure more clear, the technical solutions provided in the embodiments of the present disclosure will be clearly and comprehensively described with reference to the drawings for the embodiments of the present disclosure.

It should be noted that similar reference signs and letters refer to similar items in the following drawings. Therefore, once an item is defined in a drawing, it will not be further defined or explained in the following drawings.

It should also be noted that, in the description of the present disclosure, terms like "provide", "mount", "coupled" and "connected" should be interpreted in a broad sense, unless otherwise explicitly specified and defined. For example, a connection could be fixed, detachable, or integrated, or it could be mechanical or electrical, or it could be direct or done indirectly via an intermediate medium, or it could be internal communication between two elements. Those ordinarily skilled in the art can understand the specific meanings of the above terms in the present disclosure according to specific circumstances.

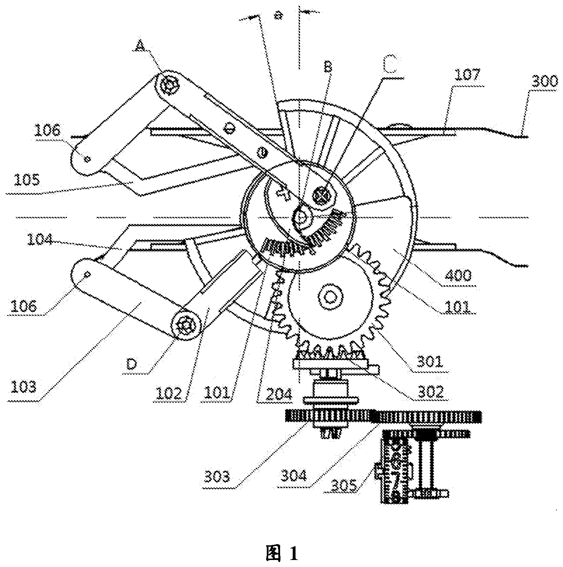

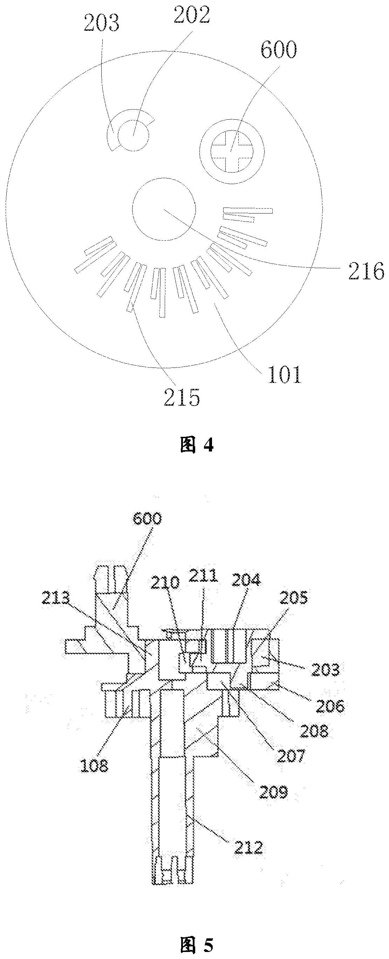

Referring to Figs. 1-5, in Fig. 1, A and D are respectively the swinging end shaft for the rocking rod 103 and the swinging end shaft for the connecting rod 102, i.e. the second rotating shaft; B is the rotation shaft of the center crank wheel 101, i.e. the fourth rotating shaft. C is the rotation shaft of the crank 600, i.e. the third rotating shaft; a is the included angle (limiting angle) between a notch edge of the valve cover 400 and a boundary rib of a metering cavity 500. The present embodiment provides a wide-range diaphragm gas meter which includes a movement 100. The movement 100 includes a diaphragm capsule 200, two diaphragms 300, two diaphragm covers, a valve cover 400, a valve seat, a fine adjustment means and a four-shaft rotation-transfer system which drives the valve cover 400 to rotate unidirectionally relative to the valve seat under the alternating motion of the two diaphragms 300.

The valve seat is connected with the diaphragm capsule 200. The valve cover is in slidable connection with the valve seat. The diaphragm capsule 200 includes two metering chambers. The two diaphragms 300 are located in the two metering chambers, respectively. Each diaphragm 300 divides its corresponding metering chamber into two metering cavities 500, forming a two-diaphragm four-cavity structure. The four metering cavities 500 are divided into two groups, two metering cavities 500 for each group. The two metering cavities 500 in each group introduce and discharge gas alternately. A gas inlet and a gas outlet are provided on the valve cover 400. When the valve cover 400 rotates around the middle shaft under the action of the center crank wheel, the gas inlet of the valve cover 400 is in communication with its corresponding metering cavity 500. At this point, that metering cavity 500 is in a state of introducing gas and the counterpart metering cavity 500 of that metering cavity 500 is in a state of discharging gas. As the two metering cavities 500 are in different states, a pressure difference is created and this pressure difference drives the diaphragms 300 to reciprocate in the metering chambers. The motion of the diaphragms 300 is output to the counter 305 by a transmission assembly. The counter 305 gives numerical values. In this way, the gas flow is obtained. Generally, there are a gas introducing cavity which is in a state of introducing gas and a gas discharging cavity which is in a state of discharging gas in both groups of metering cavities 500, and gas is introduced into the four metering cavities 500 in a reciprocating and alternating manner.

The mounting limiting positions of the diaphragms deviate from their optimum limiting positions within a range from -0.5mm to +0.5mm. This means the mounting error of the diaphragms is within a range from -0.5mm to +0.5mm, and the angle error of the rocking rod is within a range from -0.8° to +0.8°. Hence, the diaphragms are mounted in a more accurate position, the rocking rod is positioned more accurately and the gas meter has a smaller error and a higher precision during operation. The limiting position refers to that the third rotating shaft is located in the plane formed by the fourth rotating shaft and the second rotating shaft.

The four-shaft rotation-transfer system includes a connecting rod 102, a rocking rod 103, a vertical shaft 106, a middle shaft, a crank 600 and a center crank wheel 101 having transmission gears. The center crank wheel is sleeved on the middle shaft. The valve cover is disposed to be coaxial with the center crank wheel. The rotation of the center crank wheel around the middle shaft causes the valve cover to rotate around the middle shaft synchronously. The output end of each of the diaphragms is connected with its corresponding vertical shaft. The vertical shaft is the first rotating shaft. One end of the rocking rod is sleeved on the vertical shaft and rotates synchronously with the vertical shaft. The other end of the rocking rod is hinged to one end of the connecting rod. A crank is provided on the center crank wheel. The other end of the connecting rod is hinged to the crank. The diaphragms 300 reciprocate in their corresponding metering cavities under the action of gas pressure difference and cause the rocking rod 103 to move. The swing of the rocking rod 103 causes the connecting rod 102 to rotate. The connecting rod 102 is connected with the center crank wheel 101 by the crank 600. The rotation of the two connecting rods 102 causes the center crank wheel 101 to rotate, and thus causes the valve cover 400 to rotate relative to the valve seat. The gas inlet and the gas outlet of the valve cover 400 are in communication with different metering cavities 500 for gas introduction or discharge. Such cycle is repeated.

During the operation of the movement 100, the two diaphragms 300 both have two limiting positions. The limiting position refers to that the third rotating shaft is located in the plane formed by the fourth rotating shaft and the second rotating shaft. To cross the limiting positions, the diaphragms 300 change their motion directions by turning them over. In the prior art, when the diaphragm 300 reach a limiting position, the gas pressure difference between two metering cavities 500, which are cooperating, exerts zero moment on the center crank wheel 101. A diaphragm 300 in a limiting position is completely caused to cross its limiting position through the rotation of the center crank wheel 101 caused by the motion of the other diaphragm 300 individually. Such transmission mode results in a poor motion stability of the diaphragms 300 in limiting positions, decreased accuracy and decreased measurement precision of the gas meter. A zero moment means the case where the rotation point of the connecting rod 102 and the crank 600 (point C in Fig. 1) is located on the line connecting the rotation point of the rocking rod 103 and the connecting rod 102 (point A or point D in Fig. 1) and the rotation point of the center crank wheel 101 (point B in Fig. 1) or on an extension of the line, and the acting force of the connecting rod 102 is along its length which fails to cause the crank 600 to rotate around the middle shaft, so the diaphragm in a limiting position relies on the motion of the other diaphragm to cross its limiting position. This increases the measurement error and such measurement error is the maximum.

In view of this, the wide-range diaphragm gas meter provided according to the present invention includes a fine adjustment means which is configured to adjust the position of the gas inlet of the valve cover relative to the valve seat when a diaphragm is in a limiting position. In mounting a diaphragm gas meter, the limiting positions of the diaphragms are accurately located by a positioning means in a way that the deviation of the mounting limiting positions from the optimum limiting positions of the diaphragms is within a range from -0.5mm to +0.5mm, the angle error of the rocking rod is within a range from -0.8° to +0.8°. Further, by adjusting the position of the gas inlet of the valve cover relative to the valve seat when a diaphragm is in a limiting position, through adjusting a fine adjustment means, meaning that the limiting angle a can be changed by the fine adjustment means, the timing of gas introduction or discharge may be adjusted in the metering cavities, so that the gas flow direction is changed before the diaphragm reaches the limiting position. In this case, the pressures at two sides of the diaphragm are balanced, the diaphragm in the metering cavity is in a non-tensioning state, the gas flow is stable, and the fluctuation in gas pressure loss is slight. The valve cover 400 opens the inlet of the metering cavity 500 yet to be emptied before the diaphragm reaches the limiting position, and thus the gas flow direction changes before the diaphragm 300 turns over, so that the pressures at two sides of the diaphragm 300 are already balanced before the diaphragm reaches the limiting position. This leads to a more stable motion of the movement 100 and improves the measurement precision.

The diaphragm in its limiting position crosses its limiting position not only by means of the motion of the other diaphragm, but also by the flowing action of the gas in its two corresponding metering cavities. This reduces the loss of energy during that the diaphragm is caused to crossing its limiting position, improves the measurement accuracy and the measurement precision of the gas meter. And when the diaphragm is in its limiting position, the diaphragm is in a non-tensioning state. That is to say, during the entire motion process of the diaphragm, the gas does not perform work on it, and therefore, the diaphragm does not consume excess energy, improving the accuracy of cyclic volume. And the difference between the gas volume entering the metering cavities and the metered volume is reduced, further improving the accuracy and measurement precision of the gas meter.

In a preferred solution of the embodiment, each of the four-shaft rotation-transfer system further includes a front flag piece 104 and a rear flag piece 105. One of the diaphragms 300 is in driving connection with one vertical shaft 106 via the front flag piece 104. The other diaphragm 300 is in driving connection with another vertical shaft 106 via the rear flag piece 105. The linear reciprocation of the diaphragms 300 causes their corresponding vertical shafts 106 to rotate. The diaphragms 300 are connected with their corresponding vertical shafts 106 via the front flag piece 104 or the rear flag piece 105 and in turn are connected with the rocking rod 103 via the vertical shafts 106, so the motion of the diaphragms 300 causes the four-shaft rotation-transfer systems to move, realizing the rotation of the valve cover 400 relative to the valve seat., The front flag piece 104, the rear flag piece 105, the rocking rod 103 and the connecting rod 102 are precisely positioned in mounting, the components well cooperate with each other and the cyclic volume is highly accurate. Therefore, the accuracy of the gas meter is improved.

In a preferred solution of the embodiment, the movement 100 further includes a diaphragm support 107. The diaphragms 300 are mounted in the diaphragm capsule 200 via the diaphragm support 107. It is easy to mount the diaphragms 300. And the diaphragms 300 can be mounted in position precisely, which improves the mounting precision for the entire mechanism and improves the operation stability of the movement 100 and the metering precision of the wide-range diaphragm gas meter.

According to the invention, the first rotating shaft, the second rotating shaft, the third rotating shaft and the fourth rotating shaft in each of the four-shaft rotation-transfer system are parallel with each other and perpendicular to the plane where the center crank wheel is located. Therefore, the gas meter operates stably and the transmission is more flexible. In the gas meter provided by the present embodiment, by improving the positional accuracy of the front flag piece 104, the rear flag piece 105, the rocking rod 103 and the connecting rod 102 during mounting the gas meter, the accuracy of the limiting positions is guaranteed for the diaphragms 300, and the diaphragms are in a non-tensioning state all the time during motion, which improves the accuracy of the cyclic volume and thus guarantees the measurement accuracy of the gas meter. The gas meter provided by the present embodiment has high accuracy, because a fine adjustment means is used to make minor adjustment. Such adjustment is highly precise. Thus, a gas meter with high accuracy and precision is provided.

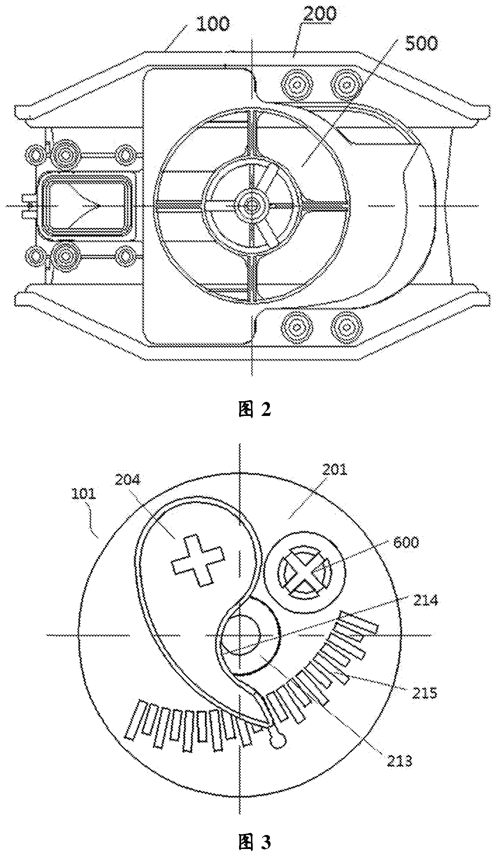

Referring to Figs. 3-5, according to the invention, the fine adjustment means includes a dial wheel 206 and a pointer body 204. The center crank wheel 101 is provided to be a pointer disk. A mounting shaft 213 and a hollow cam shaft 212 are mounted on the dial wheel 206. The mounting shaft 213 and the cam shaft 212 are located at two sides of the dial wheel 206. The transmission gear 108 is mounted on the cam shaft 212. The cam shaft 212, the mounting shaft 213 and the transmission gear are coaxially provided. The crank 600 is mounted on the pointer disk. The pointer disk is further provided with a circle center hole 216 coaxial with it, an eccentric hole 202 and successive scale slots 215. The mounting shaft 213 is inserted in the circle center hole 216. Two recesses are respectively provided at the upper and lower ends of the eccentric hole 202, with the recesses 203 communicating with the eccentric hole 202. The recess 203 at the lower end of the eccentric hole 202 is in communication with the circle center hole 216. The two recesses 203 are provided opposite to each another, bounded by the diameter of the eccentric hole 202, and in communication with each other. The recess bottom of the recess 203 at the lower end is located between the circle center hole 216 and the eccentric hole 202.

The pointer tip end of the pointer body 204 is provided with a protrusion for tight engagement within the scale slots 215. A rotation shaft 205 is provided at the pointer tail end of the pointer body 204. An engagement portion 211 is provided at the peripheral surface of the rotation shaft 205. The engagement portion 211 protrudes outwards in the radial direction of the rotation shaft 205. An engagement groove 201 is provided at the circumferential surface of the mounting shaft 213. The engagement groove 201 is concave inwards in the radial direction of the mounting shaft 213. The mounting shaft 213 is connected with the pointer disk through axial positioning of the engagement portion 211 and the engagement groove 201. An eccentric pin 208 is provided at the lower end of the rotation shaft 205.

An elongated hole 207 is provided on the wheel surface of the dial wheel 206. The elongated hole 207 extends in its length along the radial direction of the transmission gear. The eccentric pin 208 is inserted in the elongated hole 207.

When the pointer body 204 is turned, the pointer body 204 rotates about the axis of the rotation shaft 205 relative to the pointer disk. In the meantime, the eccentric pin 208 at the lower end of the rotation shaft 205 moves. Since the eccentric pin 208 is located in the elongated hole 207 on the dial wheel 206, the dial wheel 206 is inserted in the pointer disk via the mounting shaft. A connecting plate connected with the valve cover 400 by insertion is provided on the cam shaft. And the connecting plate is located below the transmission gear. The eccentric pin 208, while rotating, experiences resistance from the side walls of the elongated hole 207. The dial wheel 206 does not rotate synchronously with the eccentric pin 208, so the acting force of the eccentric pin 208 is transferred by itself to the rotation shaft 205, and as the peripheral surface of the rotation shaft 205 is attached to the inner wall of the eccentric hole 202, with a function that they push against each other. In this way, the rotation shaft 205 pushing against the pointer disk is realized, so that the sliding of the eccentric pin 208 in the elongated hole 207 causes the pointer disk to rotate around the mounting shaft. The crank 600 is in fixed connection with the pointer disk. As a result, the position of the crank 600 is changed, leading to a change in the position of the valve cover 400, a change in the limiting angle a, and a change in the position where the gas inlet and the gas outlet of the valve cover 400 are in communication with the metering cavities 500. Therefore, the metering precision is improved for the gas meter.

Referring to Fig. 3, according to the invention, each of the recesses 203 is a semicircular recess. And the semicircular recess has a radius greater than a radius of the eccentric hole 202. Accordingly, the engagement portion 211 is provided to be of a semicircular shape, so that the pointer body 204 does not move along the axial direction of the eccentric hole 202 when the engagement portion 211 rotates to the recess 203 at the lower end of the eccentric hole 202 during the rotation of the pointer body. The position of the pointer body 204 is not likely to change, ensuring that the precision of the gas meter does not change after adjustment. The recesses 203 are provided to be semicircular recesses and the engagement portion 211 is provided to be a semicircular plate, to facilitate the rotation of the pointer body 204 and to obtain a closer cooperation and a higher adjustment precision.

According to the invention, the line connecting the rotation shaft 205 and the circle center hole 216 intersects with the line connecting the crank 600 and the circle center hole 216, with an included angle of the lines being an acute angle. The side surface of the pointer body 204 that is close to the circle center hole 216 is provided to be an arc surface 214. The arc surface 214 is concave toward the other side of the pointer body. As one side of the pointer body 204 is an arc surface 214, during the rotation of the pointer body 204, when the pointer body 204 rotates toward the crank 600, the crank 600 can be located in the concave arc surface 214. The pointer body 204 rotates in a large range, which means a large range of adjustment, so a gas meter with higher precision may be obtained during adjustment.

Referring to Fig. 1, in a preferred solution of the embodiment, the wide-range diaphragm gas meter further includes a counter 305. The output end of the movement 100 is connected with the input end of the counter 305. The movement 100 works to convert the numbers of times of gas introduction and discharge into volume via the transmission mechanism, which will then be displayed on the counter 305. In this way, gas metering is achieved.

Referring to Fig. 1, in a preferred solution of the embodiment, the movement 100 includes a transition gear 301, an axial gear 302, a gear sleeve 303 and an adjustment gear 304. The transition gear 301 is connected with the center crank wheel 101 via a gear. The output end of the transition gear 301 engages with the input end of the axial gear 302. The output end of the axial gear 302 engages with the input end of the adjustment gear 304. The output end of the adjustment gear 304 engages with the input end of the counter 305. The transmission mechanism is stable and reliable. The connection structure is simple between the movement 100 and the counter 305. The error is small during transmission process. The readings on the counter 305 are more accurate.

The diaphragms 300 provided by the present embodiment are made by adhering polyester yarns. The valve cover 400 is made of modified phenolic resin by injection moulding. The diaphragm support 107, the front flag piece 104, the rear flag piece 105, the rocking rod 103, the connecting rod 102, the pointer disk, the pointer body, the center crank wheel 101 and the diaphragm capsule 200 are all made of POM plastics by injection moulding. To improve the mounting precision, the vertical shafts 106 are preferably made of a metal material.

## Claims

1. A wide-range diaphragm gas meter comprising a machine core (100), the machine core comprising a diaphragm capsule (200), two diaphragms (300), two diaphragm covers, a valve seat, a valve cover (400), a fine adjustment means (101, 204) and two groups of four-shaft rotation-transfer systems which drive the valve cover to rotate exclusively unidirectionally relative to the valve seat under an alternating motion of the two diaphragms,
- wherein the valve seat is connected with the diaphragm capsule, the valve cover is in slidable connection with the valve seat, the diaphragm capsule comprises two metering chambers, the two diaphragms are located in the two metering chambers respectively, each of the diaphragms divides the corresponding metering chamber into two metering cavities (500), each of the diaphragms is connected with the corresponding four-shaft rotation-transfer system, each group of the four-shaft rotation-transfer systems comprises a connecting rod (102), a rocking rod (103), a vertical shaft (106), a middle shaft, a crank (600) and a center crank wheel (101) having transmission gears (108), wherein the vertical shaft is a first rotating shaft which is in fixed connection with one end of the rocking rod, the other end of the rocking rod is hinged to one end of the connecting rod, a rotation shaft for connecting the rocking rod and the connecting rod is a second rotating shaft, the other end of the connecting rod is hinged to the crank, a center shaft of the crank is a third rotating shaft, the center crank wheel is sleeved on the middle shaft, the middle shaft is a fourth rotating shaft, the valve cover is disposed to be coaxial with the center crank wheel, and rotation of the center crank wheel around the middle shaft causes the valve cover to rotate around the middle shaft synchronously; and
- mounting limiting positions of the diaphragms deviate from their optimum limiting positions within a range from -0.5mm to +0.5mm, the rocking rod has an angle error within a range from -0.8° to +0.8°, the fine adjustment means is mounted at the center crank wheel to adjust a position of a gas inlet of the valve cover relative to the valve seat when one of the diaphragms is in a limiting position, such that a gas flow direction is changed before the diaphragm reaches the limiting position and thus pressures at two sides of the diaphragm are balanced and the diaphragm in the metering cavities is in a non-tensioning state, wherein the limiting position refers to that the third rotating shaft is located in a plane formed by the fourth rotating shaft and the second rotating shaft,
the first rotating shaft, the second rotating shaft, the third rotating shaft and the fourth rotating shaft in each of the four-shaft rotation-transfer systems being parallel with each other and perpendicular to a plane where the center crank wheel is located,
further wherein the fine adjustment means comprises a dial wheel (206) and a pointer body (204), the center crank wheel is provided to be a pointer disk, a mounting shaft (213) and a hollow cam shaft (212) are mounted on the dial wheel, the mounting shaft and the cam shaft are located at two sides of a plane where the dial wheel is located, the transmission gear (108) is mounted on the cam shaft, the cam shaft, the mounting shaft and the transmission gear are coaxially provided; the crank is mounted on the pointer disk, the pointer disk is further provided with a circle center hole (216) coaxial with the pointer disk, an eccentric hole (202) and successive scale slots, the mounting shaft is inserted in the circle center hole, two recesses (203) are respectively provided at upper and lower ends of the eccentric hole, with the recesses communicating with the eccentric hole, the recess at the lower end of the eccentric hole is in communication with the circle center hole, the two recesses are provided opposite to each another, bounded by a diameter of the eccentric hole and in communication with each other, and a recess bottom of the recess at the lower end of the eccentric hole is located between the circle center hole and the eccentric hole;
- a pointer tip end of the pointer body is provided with a protrusion for tight engagement within the scale slots, a rotation shaft (205) is provided at a pointer tail end of the pointer body, an engagement portion (211) is provided at a peripheral surface of the rotation shaft, the engagement portion protrudes outwards in a radial direction of the rotation shaft, an engagement groove (201) is provided at a circumferential surface of the mounting shaft, the engagement groove is concave inwards in a radial direction of the mounting shaft, the mounting shaft is connected with the pointer disk through axial positioning of the engagement portion and the engagement groove, and an eccentric pin (208) is provided at a lower end of the rotation shaft; and
- a wheel surface of the dial wheel is provided with an elongated hole (207), the elongated hole extends in its length along a radial direction of the transmission gear, and the eccentric pin is inserted in the elongated hole,
each of the recesses is a semicircular recess, and the semicircular recess has a radius greater than a radius of the eccentric hole, and the engagement portion is provided to be of a semicircular shape accordingly.
and further wherein a line connecting the rotation shaft and the circle center hole intersects with a line connecting the crank and the circle center hole, with an included angle of the lines being an acute angle, one side surface of the pointer body that is close to the circle center hole is provided to be an arc surface, and the arc surface is concave towards the other side of the pointer body.

2. The wide-range diaphragm gas meter according to claim 1, **characterized in that** each of the four-shaft rotation-transfer systems further comprises a front flag piece (104) and a rear flag piece (105), one of the diaphragms is in driving connection with one vertical shaft via the front flag piece, the other diaphragm is in driving connection with the other vertical shaft via the rear flag piece, and linear reciprocation of each of the diaphragms causes the corresponding vertical shafts to rotate.

3. The wide-range diaphragm gas meter according to claim 1, **characterized in that** the machine core further comprises a diaphragm support (107), and the diaphragms are mounted in the diaphragm capsule via the diaphragm support.

4. The wide-range diaphragm gas meter according to claim 1, **characterized in that** each vertical shaft is made of a metal material.

5. The wide-range diaphragm gas meter according to claim 1, **characterized in that** the wide-range diaphragm gas meter further comprises a counter (305), and an output end of the machine core is connected with an input end of the counter.

6. The wide-range diaphragm gas meter according to claim 5, **characterized in that** the machine core comprises a transition gear (301), an axial gear (301), a gear sleeve (303) and an adjustment gear (304), the transition gear is connected with the transmission gear via a gear, an output end of the transition gear engages with an input end of the axial gear, an output end of the axial gear engages with an input end of the adjustment gear, and an output end of the adjustment gear engages with an input end of the counter.

## Patentansprüche

1. Membrangasmesser mit breitem Messbereich, umfassend einen Maschinenkern(100), wobei der Maschinenkern eine Membrandose (200), zwei Membranen (300), zwei Membranabdeckungen, einen Ventilsitz, eine Ventilabdeckung (400), ein Feineinstellungsmittel (101, 204) und zwei Gruppen von Rotationsübertragungssystemen mit vier Wellen umfasst, die die Ventilabdeckung so antreiben, dass sie in Bezug auf den Ventilsitz im Rahmen einer alternierenden Bewegung der zwei Membranen ausschließlich unidirektional rotiert,
- wobei der Ventilsitz mit der Membrandose verbunden ist, die Ventilabdeckung mit dem Ventilsitz in verschiebbarer Verbindung steht, die Membrandose zwei Messkammern umfasst, die zwei Membranen sich jeweils in den zwei Messkammern befinden, jede der Membranen die entsprechende Messkammer in zwei Messhohlräume (500) unterteilt, jede der Membranen mit dem entsprechenden Rotationsübertragungssystem mit vier Wellen verbunden ist, jede Gruppe der Rotationsübertragungssysteme mit vier Wellen eine Verbindungsstange (102), eine Schwenkstange (103), eine vertikale Welle (106), eine Mittelwelle, eine Kurbelwelle (600) und ein zentrales Kurbelrad (101) mit Getriebezahnrädern (108) umfasst,
wobei die vertikale Welle eine erste Rotationswelle ist, die mit einem Ende der Schwenkstange in fester Verbindung steht, das andere Ende der Schwenkstange mit einem Ende der Verbindungsstange gelenkig gelagert ist, eine Rotationswelle zum Verbinden der Schwenkstange und der Verbindungsstange eine zweite Rotationswelle ist, das andere Ende der Verbindungsstange mit der Kurbelwelle gelenkig gelagert ist, eine Mittelwelle der Kurbelwelle eine dritte Rotationswelle ist, das zentrale Kurbelrad auf der Mittelwelle sitzt, die Mittelwelle eine vierte Rotationswelle ist, die Ventilabdeckung derart angeordnet ist, dass sie koaxial mit dem zentralen Kurbelrad ist, und eine Rotation des zentralen Kurbelrads um die Mittelwelle die Ventilabdeckung dazu veranlasst, dass sie synchron um die Mittelwelle rotiert; und
- Montagebegrenzungspositionen der Membranen von ihren optimalen Begrenzungspositionen in einem Bereich von - 0,5 mm bis +0,5 mm abweichen, die Schwenkstange einen Winkelfehler in einem Bereich von -0,8° bis +0,8° aufweist, das Feineinstellungsmittel am zentralen Kurbelrad montiert ist, um eine Position eines Gaseinlasses der Ventilabdeckung bezüglich des Ventilsitzes einzustellen, wenn eine der Membranen derart in einer Begrenzungsposition ist, dass eine Strömungsrichtung des Gases geändert wird, bevor die Membran die Begrenzungsposition erreicht, und somit Drücke an zwei Seiten der Membran ausgeglichen werden und die Membran in den Messhohlräumen in einem entspannten Zustand ist, wobei die Begrenzungsposition sich darauf bezieht, dass die dritte Rotationswelle sich in einer Ebene befindet, die durch die vierte Rotationswelle und die zweite Rotationswelle gebildet wird,
wobei die erste Rotationswelle, die zweite Rotationswelle, die dritte Rotationswelle und die vierte Rotationswelle in jedem der Rotationsübertragungssysteme mit vier Wellen parallel zueinander und senkrecht zu einer Ebene sind, in der sich das zentrale Kurbelrad befindet,
wobei ferner das Feineinstellungsmittel ein Messrad (206) und einen Zeigerkörper (204) umfasst, das zentrale Kurbelrad als eine Zeigerscheibe vorgesehen ist, eine Lagerwelle (213) und eine hohle Nockenwelle (212) am Messrad montiert sind, die Lagerwelle und die Nockenwelle sich an zwei Seiten einer Ebene befinden, in der sich das Messrad befindet, das Getriebezahnrad (108) an der Nockenwelle montiert ist, die Nockenwelle, die Lagerwelle und das Getriebezahnrad koaxial vorgesehen sind; die Kurbelwelle an der Zeigerscheibe montiert ist, die Zeigerscheibe ferner mit einem kreisförmigen zentralen Loch (216), das koaxial mit der Zeigerscheibe ist, einem exzentrischen Loch (202) und aufeinanderfolgende Skalierungsschlitzen versehen ist, die Lagerwelle in das kreisförmige zentrale Loch eingeführt ist, zwei Aussparungen (203) jeweils an einem oberen und einem unteren Ende des exzentrischen Lochs vorgesehen sind, wobei die Aussparungen mit dem exzentrischen Loch in Verbindung stehen, die Aussparung an dem unteren Ende des exzentrischen Lochs in Verbindung mit dem kreisförmigen zentralen Loch steht, die zwei Aussparungen einander gegenüberliegend, begrenzt durch einen Durchmesser des exzentrischen Lochs und in Verbindung miteinander vorgesehen sind, und ein Aussparungsboden der Aussparung an dem unteren Ende des exzentrischen Lochs sich zwischen dem kreisförmigen zentralen Loch und dem exzentrischen Loch befindet;
- ein Zeigerkopfende des Zeigerkörpers mit einem Vorsprung für eine enge Ineingriffnahme innerhalb der Skalierungsschlitze vorgesehen ist, eine Rotationswelle (205) an einem hinteren Zeigerende des Zeigerkörpers vorgesehen ist, ein Eingriffsabschnitt (211) an einer Umfangsoberfläche der Rotationswelle vorgesehen ist, der Eingriffsabschnitt in einer radialen Richtung der Rotationswelle nach außen hervorsteht, eine Eingriffsnut (201) an einer Mantelfläche der Lagerwelle vorgesehen ist, die Eingriffsnut in einer radialen Richtung der Lagerwelle nach innen konkav ist, die Lagerwelle durch das axiale Positionieren des Eingriffsabschnitts und der Eingriffsnut mit der Zeigerscheibe verbunden ist, und ein Exzenterstift (208) an einem unteren Ende der Rotationswelle vorgesehen ist; und
- eine Radoberfläche des Messrads mit einem länglichen Loch (207) versehen ist, das längliche Loch sich in seiner Länge entlang einer radialen Richtung des Getriebezahnrads erstreckt und der Exzenterstift in das längliche Loch eingeführt ist, jede der Aussparungen eine halbkreisförmige Aussparung ist und die halbkreisförmige Aussparung einen Radius aufweist, der größer als ein Radius des exzentrischen Lochs ist, und der Eingriffsabschnitt so vorgesehen ist, dass er dementsprechend eine halbkreisförmige Gestalt aufweist,
und wobei ferner eine Linie, die die Rotationswelle und das kreisförmige zentrale Loch verbindet, sich mit einer Linie, die die Kurbelwelle und das kreisförmige zentrale Loch verbindet, überschneidet, wobei ein Öffnungswinkel der Linien ein spitzer Winkel ist, eine Seitenoberfläche des Zeigerkörpers, die näher zum kreisförmigen zentralen Loch ist, als eine Bogenfläche vorgesehen ist, und die Bogenfläche in Richtung zur anderen Seite des Zeigerkörpers konkav ist.

2. Membrangasmesser mit breitem Messbereich nach Anspruch 1, **dadurch gekennzeichnet, dass** jedes der Rotationsübertragungssysteme mit vier Wellen ferner ein vorderes Flügelstück (104) und ein hinteres Flügelstück (105) umfasst, wobei eine der Membrane über das vordere Flügelstück mit einer vertikalen Welle in Antriebsverbindung steht, die andere Membran über das hintere Flügelstück mit der anderen vertikalen Welle in Antriebsverbindung steht und eine lineare Auf- und Abbewegung der Membranen veranlasst, dass die entsprechenden vertikalen Wellen rotieren.

3. Membrangasmesser mit breitem Messbereich nach Anspruch 1, **dadurch gekennzeichnet, dass** der Maschinenkern eine Membranhalterung (107) umfasst und die Membranen über die Membranhalterung in der Membrandose montiert sind.

4. Membrangasmesser mit breitem Messbereich nach Anspruch 1, **dadurch gekennzeichnet, dass** jede vertikale Welle aus einem Metallmaterial besteht.

5. Membrangasmesser mit breitem Messbereich nach Anspruch 1, **dadurch gekennzeichnet, dass** der Membrangasmesser mit breitem Messbereich ferner einen Zähler (305) umfasst und ein Ausgabeende des Maschinenkerns mit einem Eingabeende des Zählers verbunden ist.

6. Membrangasmesser mit breitem Messbereich nach Anspruch 5, **dadurch gekennzeichnet, dass** der Maschinenkern ein Übergangszahnrad (301), ein axiales Zahnrad (301), eine Getriebemuffe (303) und ein Einstellungszahnrad (304) umfasst, wobei das Übergangszahnrad mit dem Getriebezahnrad über ein Zahnrad verbunden ist, ein Ausgabeende des Getriebezahnrads mit einem Eingabeende des axialen Zahnrads in Eingriff steht, ein Ausgabeende des axialen Zahnrads mit einem Eingabeende des Einstellungszahnrads in Eingriff steht und ein Ausgabeende des Einstellungszahnrads mit einem Eingabeende des Zählers in Eingriff steht.

## Revendications

1. Compteur de gaz à diaphragme à large portée comprenant un noyau de machine (100), le noyau de machine comprenant une capsule à diaphragme (200), deux diaphragmes (300), deux couvercles de diaphragme, un siège de vanne, un couvercle de vanne (400), un moyen de réglage fin (101, 204) et deux groupes de systèmes de transfert de rotation à quatre arbres qui entraînent le couvercle de vanne en rotation exclusivement de manière unidirectionnelle par rapport au siège de vanne sous un mouvement alternatif des deux diaphragmes,
- dans lequel le siège de vanne est connecté à la capsule à diaphragme, le couvercle de vanne est en connexion coulissante avec le siège de vanne, la capsule à diaphragme comprend deux chambres de mesure, les deux diaphragmes sont situés respectivement dans les deux chambres de mesure, chacun des diaphragmes divise la chambre de mesure correspondante en deux cavités de mesure (500), chacun des diaphragmes est connecté au système de transfert de rotation à quatre arbres correspondant, chaque groupe des systèmes de transfert de rotation à quatre arbres comprend une tige de connexion (102), une tige oscillante (103), un arbre vertical (106), un arbre médian, une manivelle (600) et un vilebrequin central (101) ayant un pignon de transmission (108), dans lequel l'arbre vertical est un premier arbre rotatif qui est en connexion fixe avec une extrémité de la tige oscillante, l'autre extrémité de la tige oscillante est articulée à une extrémité de la tige de connexion, un arbre rotatif pour connecter la tige oscillante et la tige de connexion est un deuxième arbre rotatif, l'autre extrémité de la tige de connexion est articulée sur la manivelle, un arbre central de la manivelle est un troisième arbre rotatif, le vilebrequin central est emmanché sur l'arbre médian, l'arbre médian est un quatrième arbre rotatif, le couvercle de vanne est disposé de manière à être coaxial avec le vilebrequin central, et une rotation du vilebrequin central autour de l'arbre médian amène le couvercle de vanne à tourner autour de l'arbre médian de manière synchrone ; et
- les positions limites de montage des diaphragmes s'écartent de leurs positions limites optimales dans une plage de -0,5 mm à +0,5 mm, la tige oscillante présente une erreur d'angle dans une plage de -0,8° à +0,8°, le moyen de réglage fin est monté au niveau du vilebrequin central pour régler une position d'une entrée de gaz du couvercle de vanne par rapport au siège de vanne quand l'un des diaphragmes est dans une position limite, de sorte qu'une direction d'écoulement de gaz est modifiée avant que le diaphragme n'atteigne la position limite et donc les pressions sur deux côtés du diaphragme sont équilibrées et le diaphragme dans les cavités de mesure est dans un état sans tension, dans lequel la position limite fait référence au fait que le troisième arbre rotatif est situé dans un plan formé par le quatrième arbre rotatif et le deuxième arbre rotatif,
le premier arbre rotatif, le deuxième arbre rotatif, le troisième arbre rotatif et le quatrième arbre rotatif dans chacun des systèmes de transfert de rotation à quatre arbres étant parallèles entre eux et perpendiculaires à un plan où le vilebrequin central est situé,
en outre dans lequel le moyen de réglage fin comprend une roue à cadran (206) et un corps de pointeur (204), le vilebrequin central est configuré pour être un disque de pointeur, un arbre de montage (213) et un arbre à cames creux (212) sont montés sur la roue à cadran, l'arbre de montage et l'arbre à cames sont situés des deux côtés d'un plan où la roue à cadran est située, le pignon de transmission (108) est monté sur l'arbre à cames, l'arbre à cames, l'arbre de montage et le pignon de transmission sont fournis de manière coaxiale ; la manivelle est montée sur le disque de pointeur, le disque de pointeur est en outre pourvu d'un trou central circulaire (216) coaxial au disque de pointeur, d'un trou excentré (202) et de fentes de graduation successives, l'arbre de montage est inséré dans le trou central circulaire, deux évidements (203) sont respectivement pratiqués aux extrémités supérieure et inférieure du trou excentré, avec les évidements communiquant avec le trou excentré, l'évidement à l'extrémité inférieure du trou excentré est en communication avec le trou central circulaire, les deux évidements sont fournis à l'opposé l'un de l'autre, délimités par un diamètre du trou excentré et en communication l'un avec l'autre, et un fond d'évidement de l'évidement à l'extrémité inférieure du trou excentré est situé entre le trou central circulaire et le trou excentré ;
- une extrémité de pointe de pointeur du corps de pointeur est pourvue d'une saillie à des fins d'entrée en force à l'intérieur des fentes de graduation, un arbre rotatif (205) est fourni à une extrémité de queue de pointeur du corps de pointeur, une partie d'entrée en prise (211) est disposée sur une surface périphérique de l'arbre rotatif, la partie d'entrée en prise fait saillie vers l'extérieur dans une direction radiale de l'arbre rotatif, une rainure d'entrée en prise (201) est fournie sur une surface circonférentielle de l'arbre de montage, la rainure d'entrée en prise est concave vers l'intérieur dans une direction radiale de l'arbre de montage, l'arbre de montage est connecté au disque de pointeur par positionnement axial de la partie d'entrée en prise et de la rainure d'entrée en prise, et une broche excentrée (208) est fournie à une extrémité inférieure de l'arbre rotatif ; et
- une surface de roue de la roue à cadran est pourvue d'un trou allongé (207), le trou allongé s'étend dans sa longueur le long d'une direction radiale du pignon de transmission, et la broche excentrée est insérée dans le trou allongé,
chacun des évidements est un évidement semi-circulaire, et l'évidement semi-circulaire présente un rayon supérieur à un rayon du trou excentré, et la partie d'entrée en prise est fournie pour être d'une forme semi-circulaire en conséquence.
et en outre dans lequel une ligne reliant l'arbre rotatif et le trou central circulaire coupe une ligne reliant la manivelle et le trou central circulaire, un angle inclus des lignes étant un angle aigu, une surface latérale du corps de pointeur qui est proche du trou central circulaire est fournie pour être une surface d'arc, et la surface d'arc est concave vers l'autre côté du corps de pointeur.

2. Compteur de gaz à diaphragme à large portée selon la revendication 1, **caractérisé en ce que** chacun des systèmes de transfert de rotation à quatre arbres comprend en outre une aile avant (104) et une aile arrière (105), l'un des diaphragmes est en connexion d'entraînement avec un arbre vertical via l'aile avant, l'autre diaphragme est en connexion d'entraînement avec l'autre arbre vertical via l'aile arrière, et un mouvement de va-et-vient linéaire de chacun des diaphragmes amenant les arbres verticaux correspondants à tourner.

3. Compteur de gaz à diaphragme à large portée selon la revendication 1, **caractérisé en ce que** le noyau de machine comprend en outre un support de diaphragme (107), et les diaphragmes sont montés dans la capsule à diaphragme via le support de diaphragme.

4. Compteur de gaz à diaphragme à large portée selon la revendication 1, **caractérisé en ce que** chaque arbre vertical est fait d'un matériau métallique.

5. Compteur de gaz à diaphragme à large portée selon la revendication 1, **caractérisé en ce que** le compteur de gaz à diaphragme à large portée comprend en outre un compteur (305), et une extrémité de sortie du noyau de machine est connectée à une extrémité d'entrée du compteur.

6. Compteur de gaz à diaphragme à large portée selon la revendication 5, **caractérisé en ce que** le noyau de machine comprend un pignon de transition (301), un pignon axial (301), un manchon de pignon (303) et un pignon de réglage (304), le pignon de transition est connecté au pignon de transmission via un pignon, une extrémité de sortie du pignon de transition entre en prise avec une extrémité d'entrée du pignon axial, une extrémité de sortie du pignon axial entre en prise avec une extrémité d'entrée du pignon de réglage, et une extrémité de sortie du pignon de réglage entre en prise avec une extrémité d'entrée du compteur.
